(19) **Europäisches Patentamt**
**European Patent Office**
**Office européen des brevets**

(11) **EP 4 269 343 A1**

(12) **EUROPEAN PATENT APPLICATION**
published in accordance with Art. 153(4) EPC

(43) Date of publication:
**01.11.2023 Bulletin 2023/44**

(21) Application number: **21910102.9**

(22) Date of filing: **24.11.2021**

(51) International Patent Classification (IPC):
$C01B\ 33/26^{(2006.01)}$     $C01B\ 33/18^{(2006.01)}$
$C04B\ 35/18^{(2006.01)}$     $C08K\ 3/013^{(2018.01)}$
$C08K\ 3/20^{(2006.01)}$     $C08K\ 9/00^{(2006.01)}$
$C08L\ 101/00^{(2006.01)}$

(52) Cooperative Patent Classification (CPC):
**C01B 33/18; C01B 33/26; C04B 35/18;**
**C08K 3/013; C08K 3/20; C08K 9/00; C08L 101/00**

(86) International application number:
**PCT/JP2021/042902**

(87) International publication number:
**WO 2022/137949 (30.06.2022 Gazette 2022/26)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **24.12.2020 JP 2020214431**
         **25.03.2021 JP 2021051068**

(71) Applicant: **Denka Company Limited**
**Tokyo 103-8338 (JP)**

(72) Inventors:
• **TSUNEYOSHI, Toshihiko**
**Tokyo 103-8338 (JP)**
• **FUKAZAWA, Motoharu**
**Tokyo 103-8338 (JP)**

(74) Representative: **Gulde & Partner**
**Patent- und Rechtsanwaltskanzlei mbB**
**Wallstraße 58/59**
**10179 Berlin (DE)**

(54) **OXIDE COMPOSITE PARTICLES, METHOD FOR PRODUCING SAME AND RESIN COMPOSITION**

(57) Provided are oxide composite particles to be mixed with a resin to obtain a resin composition having high thermal conductivity, low dielectric constant, and low dielectric loss tangent. The oxide composite particles containing silica and alumina, in which the oxide composite particles contain 40 to 85% by mass of an $\alpha$-cristobalite crystal phase, 5 to 50% by mass of an $\alpha$-alumina crystal phase, and 10% by mass or less of a mullite crystal phase, and an elemental ratio of aluminum to silicon (aluminum/silicon) as determined by X-ray photoelectron spectroscopy is 1.5 or more.

Fig. 1

**Description**

TECHNICAL FIELD

The present invention relates to oxide composite particles, a method for producing the same, and a resin composition.

BACKGROUND ART

With the recent increase in the volume of information and communications in the field of communication, use of high-frequency bands has been spreading in electronic devices, communication devices, and the like. Therefore, materials for use in high-frequency devices are required to have low dielectric constant and low dielectric loss tangent. Further, related electronic materials and members have become increasingly smaller and highly integrated, and therefore materials for use in high-frequency devices are required to have higher heat dissipation properties.

Silica ($SiO_2$) as a high-frequency ceramic material has a low dielectric constant (3.7) and a quality factor index Qf (which is a value obtained by multiplying the reciprocal of dielectric loss tangent and measurement frequency) of about 120,000, and is therefore a promising material for a filler having low dielectric constant and low dielectric loss tangent. The shape of the filler is preferably closer to a sphere to facilitate blending with a resin. Spherical silica can easily be synthesized (for example, PTL 1) and has already been used for various purposes. Therefore, spherical silica is expected to widely be used also in high-frequency dielectric devices and the like.

However, such spherical silica is generally amorphous and has a thermal conductivity as low as about 1 W/m·K. Therefore, a resin composition containing spherical silica as a filler may be insufficient in heat dissipation properties.

In order to improve thermal conductivity, amorphous spherical silica may be crystallized into quartz, cristobalite or the like. For example, PTLs 2 and 3 propose that amorphous spherical silica is crystallized into quartz or cristobalite by heat treatment. On the other hand, PTL 4 discloses a silica powder having an aluminum oxide-based ceramic coating film formed using aerosil.

CITATION LIST

PATENT LITERATURE

PTL 1: Japanese Patent Laid-Open No. 58-138740
PTL 2: Japanese Patent No. 6207753
PTL 3: International Publication No. WO 2018/186308
PTL 4: Japanese Patent Laid-Open No. 10-251042

SUMMARY OF INVENTION

TECHNICAL PROBLEM

It is an object of the present invention to provide oxide composite particles to be mixed with a resin to obtain a resin composition having high thermal conductivity, low dielectric constant, and low dielectric loss tangent, a method for producing the same, and the resin composition.

SOLUTION TO PROBLEM

The present invention includes the following embodiments.

[1] Oxide composite particles containing silica and alumina, wherein

the oxide composite particles contain 40 to 85% by mass of an $\alpha$-cristobalite crystal phase, 5 to 50% by mass of an $\alpha$-alumina crystal phase, and 10% by mass or less of a mullite crystal phase, and
an elemental ratio of aluminum to silicon (aluminum/silicon) as determined by X-ray photoelectron spectroscopy is 1.5 or more.

[2] The oxide composite particles according to [1], wherein a content of the alumina in the oxide composite particles is 15 to 50% by mass.

[3] The oxide composite particles according to [1] or [2], wherein an average particle diameter of the oxide composite particles is 0.5 to 70 μm.

[4] The oxide composite particles according to any one of [1] to [3], wherein an average circularity of the oxide composite particles is 0.7 or more.

[5] A method for producing the oxide composite particles according to any one of [1] to [4], the method including the steps of:

mixing silica particles having an average particle diameter of 0.5 to 70 μm and alumina particles having an average angle of repose of 50° or more and a specific surface area of 50 to 170 $m^2$/g to obtain a mixture; and heating the mixture at 1300 to 1500°C for 2 to 8 hours.

[6] A resin composition containing the oxide composite particles according to any one of [1] to [4] and a resin.

[7] The resin composition according to [6], wherein a content of the oxide composite particles in the resin composition is 20 to 80% by mass.

[8] The resin composition according to [6] or [7], which is a resin composition for high-frequency substrates.

ADVANTAGEOUS EFFECTS OF INVENTION

The present invention can provide oxide composite particles to be mixed with a resin to obtain a resin composition having high thermal conductivity, low dielectric constant, and low dielectric loss tangent, a method for producing the same, and the resin composition.

BRIEF DESCRIPTION OF DRAWING

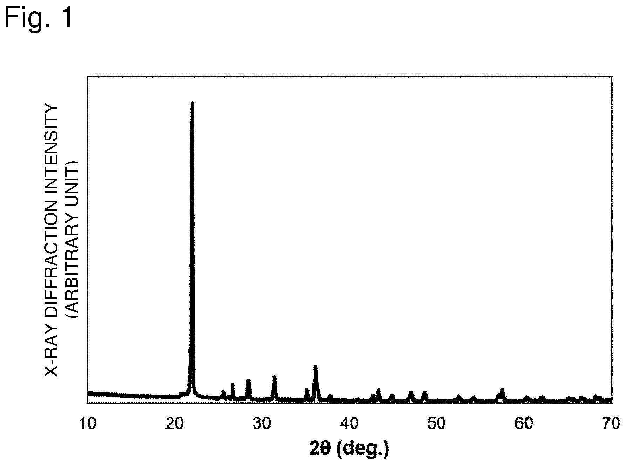

Fig. 1 is a diagram showing the X-ray diffraction pattern of oxide composite particles of Example 1.

DESCRIPTION OF EMBODIMENTS

Hereinbelow, an embodiment of the present invention will be described. However, the present invention is not limited to the following embodiment.

[Oxide composite particles]

Oxide composite particles according to the present embodiment contain silica and alumina. Here, the oxide composite particles contain 40 to 85% by mass of an α-cristobalite crystal phase, 5 to 50% by mass of an α-alumina crystal phase, and 10% by mass or less of a mullite crystal phase. Further, the elemental ratio of aluminum to silicon (aluminum/silicon) as determined by X-ray photoelectron spectroscopy (hereinafter also referred to as XPS) is 1.5 or more.

The oxide composite particles according to the present embodiment contain an α-cristobalite crystal phase, an α-alumina crystal phase, and a mullite crystal phase so that their contents are respectively within the above-described ranges, which makes it possible to obtain a resin composition having high thermal conductivity, low dielectric constant, and low dielectric loss tangent. Particularly, the oxide composite particles according to the present embodiment have an aluminum/silicon elemental ratio of 1.5 or more as determined by XPS, and therefore have a structure such that a large amount of alumina is present at the surface of the oxide composite particles and at least part of the surface of the oxide composite particles is coated with an alumina layer. The alumina layer located at the surface of the oxide composite particles exhibits high thermal conductivity, and the α-cristobalite crystal phase contained in the oxide composite particles exhibits low dielectric constant and low dielectric loss tangent, and therefore high thermal conductivity, low dielectric constant, and low dielectric loss tangent can be achieved as a whole.

The oxide composite particles contain 40 to 85% by mass of an α-cristobalite crystal phase with respect to the total mass of the oxide composite particles (i.e., the total mass of the oxide composite particles is taken as 100% by mass). If the content of the α-cristobalite crystal phase is less than 40% by mass, it is difficult to use the oxide composite particles for high-frequency devices due to high dielectric constant and high dielectric loss tangent. On the other hand, if the content exceeds 85% by mass, it is impossible to guarantee the thermal conductivity of a resulting resin composition. The content may be, for example, 50 to 85% by mass, 60 to 85% by mass, 70 to 85% by mass, or 75 to 85% by mass. The identification and quantification of the crystal phase are performed by powder X-ray diffraction/Rietveld method. The assignment of crystals can be performed by, for example, an X-ray database, etc. Specifically, analysis can be performed by the method described later.

The oxide composite particles contain 5 to 50% by mass of an α-alumina crystal phase with respect to the total mass of the oxide composite particles (i.e., the total mass of the oxide composite particles is taken as 100% by mass). If the content of the α-alumina crystal phase is less than 5% by mass, it is impossible to guarantee the thermal conductivity of a resulting resin composition. On the other hand, if the content exceeds 50% by mass, it is difficult to use the oxide composite particles for high-frequency devices due to high dielectric constant and high dielectric loss tangent. The content may be, for example, 10 to 50% by mass, 10 to 40% by mass, 10 to 30% by mass, 10 to 25% by mass, or 10 to 20% by mass. The identification and quantification of the crystal phase and the assignment of crystals can be performed in the same manner as in the case of the α-cristobalite crystal phase. Specifically, analysis can be performed by the method described later.

The oxide composite particles contain 10% by mass or less of a mullite crystal phase with respect to the total mass of the oxide composite particles (i.e., the total mass of the oxide composite particles is taken as 100% by mass). If the content of the mullite crystal phase exceeds 10% by mass, dielectric characteristics such as dielectric constant and dielectric loss tangent and thermal conductive performance reduce, albeit only slightly. The content of the mullite crystal phase may be 5% by mass or less and may also be 1% by mass or less. The lower limit of the content of the mullite crystal phase is not limited and may be, for example, 0.01% by mass or more. It should be noted that the oxide composite particles according to the present embodiment do not always have to contain the mullite crystal phase. The identification and quantification of the crystal phase and the assignment of crystals can be performed in the same manner as in the case of the α-cristobalite crystal phase. Specifically, analysis can be performed by the method described later.

The oxide composite particles may contain 50% by mass or less of amorphous silica, preferably contains 0.01 to 15% by mass of amorphous silica, more preferably contains 0.01 to 5% by mass of amorphous silica with respect to the total mass of the oxide composite particles (i.e., the total mass of the oxide composite particles is taken as 100% by mass). When the content of amorphous silica is 50% by mass or less, the value of dielectric loss tangent can be kept low. It should be noted that the oxide composite particles according to the present embodiment do not always have to contain amorphous silica. The identification and quantification of amorphous silica can be performed in the same manner as in the case of the α-cristobalite crystal phase. Specifically, analysis can be performed by the method described later.

The oxide composite particles may further contain another crystal phase or another amorphous phase other than the above-described α-cristobalite crystal phase, α-alumina crystal phase, mullite crystal phase, and amorphous silica. Examples of the another crystal phase include γ-alumina, θ-alumina, and quartz. Examples of the another amorphous phase include alumina. The content of the another crystal phase may be, for example, 0 to 8% by mass or 0 to 4% by mass with respect to the total mass of the oxide composite particles (i.e., the total mass of the oxide composite particles is taken as 100% by mass). The content of the another amorphous phase may be, for example, 0 to 8% by mass or 0 to 4% by mass with respect to the total mass of the oxide composite particles (i.e., the total mass of the oxide composite particles is taken as 100% by mass). It should be noted that the oxide composite particles do not always have to contain the another crystal phase or the another amorphous phase.

The content of alumina in the oxide composite particles (when the total mass of the oxide composite particles is taken as 100% by mass) is preferably 15 to 50% by mass. When the content is 15% by mass or more, a resulting resin composition can achieve heat dissipation performance at or above a certain level. When the content is 50% by mass or less, the oxide composite particles have low dielectric constant and low dielectric loss tangent, which makes it possible to use the oxide composite particles for high-frequency devices. The content may be, for example, 15 to 40% by mass or 15 to 30% by mass. It should be noted that "alumina" herein refers to all alumina components also including components other than α-alumina. The content of alumina is calculated from the amount alumina charged during synthesis.

The content of silica in the oxide composite particles (when the total mass of the oxide composite particles is taken as 100% by mass) is preferably 50 to 90% by mass. When the content is 50% by mass or more, the oxide composite particles have low dielectric constant and low dielectric loss tangent, which makes it possible to use the oxide composite particles for high-frequency devices. It should be noted that the content of silica is calculated from the amount of silica charged during synthesis.

The oxide composite particles may further contain an additional component other than silica and alumina, but may consist of silica and alumina.

The oxide composite particles have an elemental ratio of aluminum/silicon of 1.5 or more as determined by XPS (X-ray Photoelectron Spectroscopy). XPS can obtain information of elements present several nanometers below the surface of a measurement sample, and therefore the oxide composite particles according to the present embodiment whose elemental ratio described above is 1.5 or more have a structure such that a large amount of alumina is present at the surface of the oxide composite particles and at least part of the surface of the oxide composite particles is coated with an alumina layer. The elemental ratio is preferably 2.0 or more, and more preferably 2.3 or more. The surface of the oxide composite particles is preferably coated with an alumina layer as much as possible, and therefore the elemental ratio is preferably higher. It should be noted that the elemental ratio of aluminum/silicon determined by XPS can be measured by the method described later.

The average particle diameter of the oxide composite particles is preferably 0.5 to 70 μm. When the average

particle diameter is 0.5 $\mu$m or more, a resulting resin composition can achieve a certain level of heat dissipation characteristics. When the average particle diameter is 70 $\mu$m or less, the oxide composite particles can be used as an exoergic filler for high-frequency devices to fill a gap between materials. The average particle diameter may be, for example, 5 to 70 $\mu$m, 10 to 65 $\mu$m, or 20 to 60 $\mu$m. It should be noted that the average particle diameter is measured using a laser diffraction particle size distribution analyzer. Specifically, the average particle diameter can be measured by the method described later.

The average circularity of the oxide composite particles is preferably 0.7 or more. When the average circularity is 0.7 or more, a resulting resin composition can achieve low viscosity. The average circularity is more preferably 0.8 or more, even more preferably 0.85 or more, and particularly preferably 0.9 or more. The upper limit of the average circularity is not limited. The average circularity is preferably as high as possible and may be 1. As will be described later, when produced using spherical raw material silica particles, the oxide composite particles can have high average circularity. The average circularity is measured by the following method. The projected area (S) and projected perimeter (L) of a single oxide composite particle are determined from a photograph taken by an electron microscope and are plugged into the following formula (1) to calculate circularity. The average of circularities of all the oxide composite particles included in a circle having a certain projected area (in an area including 100 or more oxide composite particles) is calculated and defined as an average circularity. Specifically, the average circularity can be measured by the method described later.

$$Circularity = 4\pi S / L^2 \ (1)$$

When the oxide composite particles according to the present embodiment are mixed with a resin, a resulting resin composition can have high thermal conductivity, low dielectric constant, and low dielectric loss tangent. Therefore, the oxide composite particles according to the present embodiment are useful as a filler to be contained in a resin composition required to have such physical properties (e.g., a resin composition for high-frequency substrates, etc.).

[Method for producing oxide composite particles]

A method for producing oxide composite particles according to the present embodiment includes the steps of: mixing silica particles having an average particle diameter of 0.5 to 70 $\mu$m and alumina particles having an average angle of repose of 50° or more and a specific surface area of 50 to 170 m$^2$/g to obtain a mixture (hereinafter also referred to as mixture production step); and heating the mixture at 1300 to 1500°C for 2 to 8 hours (hereinafter also referred to as heating step). The method according to the present embodiment can easily and efficiently produce the oxide composite particles according to the present embodiment.

(Mixture production step)

In this step, silica particles having an average particle diameter of 0.5 to 70 $\mu$m and alumina particles having an average angle of repose of 50° or more and a specific surface area of 50 to 170 m$^2$/g are mixed to obtain a mixture.

The silica particles used as a raw material are not limited in crystal system and may be amorphous, quartz, cristobalite, or the like, and a method for producing the silica particles is not limited, either. However, SiO$_2$ containing 90% by mass or more of an amorphous phase is preferably used, and SiO$_2$ formed from an amorphous phase is more preferably used. SiO$_2$ containing 90% by mass or more of an amorphous phase may be SiO$_2$ produced by, for example, a flame fusion method, a deflagration method, a gas phase method, or a wet method.

The particle diameters of oxide composite particles obtained after heating mainly reflect the particle diameters of the silica particles as a raw material. Therefore, the average particle diameter of the silica particles may be, for example, 0.5 to 70 $\mu$m, 3 to 65 $\mu$m, 20 to 60 $\mu$m, or 35 to 55 $\mu$m. It should be noted that the average particle diameter is measured in the same manner as the average particle diameter of the oxide composite particles. Further, the shape of oxide composite particles obtained after heating mainly reflects the shape of the silica particles as a raw material. Therefore, spherical silica particles are preferably used because the oxide composite particles can have high average circularity. The average circularity of the silica particles is preferably 0.60 or more, preferably 0.70 or more, and even more preferably 0.80 or more. It should be noted that the average circularity is measured in the same manner as the average circularity of the oxide composite particles.

Alumina of the alumina particles used as a raw material is not limited, and examples thereof include $\gamma$-Al$_2$O$_3$, $\theta$-Al$_2$O$_3$, and $\alpha$-Al$_2$O$_3$. These may be used singly or in combination of two or more.

The average angle of repose of the alumina particles is preferably 50° or more, and more preferably 52° or more. When the average angle of repose is 50° or more, the alumina particles have low fluidity, and therefore a sufficient amount of the alumina particles adhere to the surface of the silica particles during mixing, which makes it possible to obtain oxide composite particles having a structure such that the surface thereof is sufficiently coated with an alumina layer. The upper limit of the average angle of repose is not limited and may be, for example, 55° or less. The average angle of repose is measured by the method described later. It should be noted that when aerosil is used as alumina particles, the alumina particles are segregated on the surface of the silica particles because the average angle of repose of aerosil is less than 50°, and therefore the surface of the silica particles is not sufficiently coated with an alumina layer. As a result, the elemental ratio of aluminum/silicon determined by XPS is less than 1.5.

The specific surface area of the alumina particles is preferably 50 to 170 m$^2$/g, more preferably 60 to 130 m$^2$/g, and even more preferably 70 to 100 m$^2$/g. When the specific surface area is 50 m$^2$/g or more, the alumina particles are stably and easily adsorbed to the silica surface, which makes the degree of surface coating with an alumina layer large. When the specific surface area is 170 m$^2$/g or less, bulkiness of the alumina particles is reduced to a certain level or less, which makes it possible to synthesize oxide composite particles by this method. It should be noted that the specific surface area is measured by the method described later.

The method of mixing the silica particles and the alumina particles may be either dry mixing or wet mixing, but dry mixing is preferred because dry mixing uses no solvent and therefore does not require solvent drying, which makes it possible to reduce the production cost of oxide composite particles. The mixing method may be, for example, a method using any of an agate mortar, pulverizers such as a ball mill and a vibration mill, and various mixers.

(Heating step)

In this step, the mixture obtained in the mixture production step is heated at 1300 to 1500°C for 2 to 8 hours. A heating device for heating the mixture is not limited as long as high-temperature heating can be performed, and examples thereof include an electric furnace and a pusher furnace. A heating atmosphere is not limited, and examples thereof include air, N$_2$, Ar, and vacuum.

A heating temperature is preferably 1300 to 1500°C, more preferably 1300 to 1450°C, and even more preferably 1300 to 1400°C. When the heating temperature is 1300°C or higher, the content of cristobalite increases, and therefore thermal conductivity required for an exoergic filler can be achieved. When the heating temperature is 1500°C or lower, it is possible to prevent a reduction in the circularity of oxide composite particles due to fusion between particles caused by heating. A heating time is preferably 2 to 8 hours, more preferably 2 to 6 hours, and even more preferably 4 to 5 hours. When the heating time is 2 hours or more, the content of cristobalite increases, and therefore thermal conductivity required for an exoergic filler can be achieved. When the heating time is 8 hours or less, it is possible to prevent a reduction in the circularity of oxide composite particles due to fusion between particles caused by heating.

The oxide composite particles obtained after heating may be in the form of agglomerates obtained by agglomeration of the particles. The agglomerates may directly be used as oxide composite particles. However, if necessary, the agglomerates may be disintegrated before used as oxide composite particles. A method for disintegrating the agglomerates is not limited and may be, for example, a method using an agate mortar, a ball mill, a vibration mill, a jet mill, or a wet jet mill. The disintegration may be performed either by a dry method or a wet method in which the agglomerates are mixed with a liquid such as water or an alcohol. In the case of wet disintegration, oxide composite particles are obtained by performing drying after disintegration. A method for drying is not limited, and examples thereof include heat drying, vacuum drying, freeze drying, and supercritical carbon dioxide drying.

(Another step)

The method for producing oxide composite particles according to the present embodiment may further include, in addition to the mixture production step and the heating step, another step such as a classification step in which the oxide composite particles are classified to achieve a desired average particle diameter or a washing step to reduce impurities.

[Resin composition]

A resin composition according to the present embodiment contains the oxide composite particles according to the present embodiment and a resin. The resin composition according to the present embodiment contains the oxide composite particles according to the present embodiment and therefore can have high thermal conductivity, low dielectric constant, and low dielectric loss tangent. Further, the resin composition according to the present embodiment has low viscosity and therefore has high fluidity and excellent moldability.

The resin is not limited, and examples thereof include polyethylene, polypropylene, epoxy resins, silicone resins, phenol resins, melamine resins, urea resins, unsaturated polyesters, fluorine resins, polyamides such as polyimides, polyamideimides, and polyetherimides, polyesters such as polybutylene terephthalate and polyethylene terephthalate, polyphenylene sulfides, wholly aromatic polyesters, polysulfones, liquid crystal polymers, polyether sulfones, polycarbonates, modified maleimide resins, ABS resins, AAS (acrylonitrile-acrylic rubber-styrene) resins, and AES (acrylonitrile-ethylene/propylene/diene rubber-styrene) resins. These resins may be used singly or in combination of two or more.

The content of the oxide composite particles in the resin composition is appropriately selected depending on desired physical properties such as thermal conductivity, dielectric constant, and dielectric loss tangent, but is preferably 20 to 80% by mass. This content corresponds to 11 to 67% by volume when the density of the oxide composite particles is 2.4 and the density of the resin is 1.2, and corresponds to 9 to 61% by volume when the density of the oxide composite particles is 3.1 and the density of the resin is 1.2.

The resin composition according to the present embodiment may contain an additional component other than the oxide composite particles according to the present embodiment and the resin. Examples of the additional component include a flame retardant and glass cloth. Further, particles different from the oxide composite particles according to the present embodiment in composition, specific surface area, average particle diameter, and others may further be mixed, which makes it easier to adjust the thermal conductivity, dielectric constant, dielectric loss tangent, filling factor, and others of the resin composition.

The thermal conductivity of the resin composition according to the present embodiment is preferably 0.80 W/m·K or more, and more preferably 0.85 W/m·K or more. The dielectric constant of the resin composition according to the present embodiment is preferably 4.0 or less, and more preferably 3.5 or less. The dielectric loss tangent of the resin composition according to the present embodiment is preferably $5.0 \times 10^{-4}$ or less, and more preferably $4.0 \times 10^{-4}$ or less. The viscosity of the resin composition according to the present embodiment is preferably 700 Pa·s or less, and more preferably 500 Pa·s or less. It should be noted that the thermal conductivity, dielectric constant, dielectric loss tangent, and viscosity of the resin composition are measured by the methods described later.

The resin composition according to the present embodiment has high thermal conductivity, low dielectric constant, and low dielectric loss tangent, and is therefore particularly useful as a resin composition for high-frequency substrates. Specific examples of the high-frequency substrates include fluorine substrates, PPE substrates, and ceramic substrates.

EXAMPLES

Hereinbelow, an embodiment of the present invention will more specifically be described with reference to examples, but the present invention is not limited to these examples.

[Example 1]

Alumina particles (trade name: AKPG07, manufactured by SUMITOMO CHEMICAL COMPANY, LIMITED, average angle of repose: 52.5°, specific surface area: 80.0 m²/g) were added to silica particles (trade name: FB40R, manufactured by Denka Company Limited, average particle diameter: 50.1 μm) so that the amount of the alumina particles added was 15% by mass. Further, the mixed particles were mixed by a vibration mixer (manufactured by Resodyn, trade name: low-frequency resonance acoustic mixer LabRAM II). Then, 10 g of the obtained mixture was placed in an alumina crucible and heated in an electric furnace by increasing the temperature from a room temperature at 10°C/min. At this time, the heating temperature was 1400°C and the heating time was 4 hours. After heated, the mixture was naturally cooled. After cooled, the sample was disintegrated in an agate mortar to obtain oxide composite particles. The oxide composite particles were evaluated by the methods described later.

[Examples 2 to 6 and Comparative Examples 1 to 4]

Oxide composite particles were prepared and evaluated in the same manner as in Example 1 except that the types and amounts of the raw materials added, the heating time, and the heating temperature were changed as shown in Table 1 or Table 2. It should be noted that in Examples 2 and 6 and Comparative Examples 2 and 4, silica particles (trade name: FB5D, manufactured by Denka Company Limited, average particle diameter: 8.0 μm) were used. In Comparative Example 4, alumina particles (trade name: TM-DA, manufactured by TAIMEI CHEMICAL CO., LTD., average angle of repose: 48.0°, specific surface area: 6.6 m²/g) were used.

[Examples 7 and 8]

Alumina particles (trade name: AKPG07, manufactured by SUMITOMO CHEMICAL COMPANY, LIMITED, average angle of repose: 52.5°, specific surface area: 80.0 m²/g) were added to silica particles (trade name: FB40R, manufactured by Denka Company Limited, average particle diameter: 50.1 μm) or silica particles (trade name: FB5D, manufactured by Denka Company Limited, average particle diameter: 8.0 μm) so that the amount of the alumina particles added was 15% by mass. Further, the mixed particles were mixed by a vibration mixer (manufactured by Resodyn, trade name: low-frequency resonance acoustic mixer Lab RAM II). Then, 1 kg of the obtained mixture was placed in an alumina crucible and heated in an electric furnace by increasing the temperature from a room temperature at 2.5°C/min. At this time, the heating temperature was 1400°C and the heating time was 4 hours. After heated, the mixture was naturally cooled. After cooled, the sample was disintegrated in an agate mortar to obtain oxide composite particles. The oxide composite particles were evaluated by the methods described later.

The characteristics of the oxide composite particles prepared in Examples and Comparative Examples were evaluated by the methods described below. The evaluation results are shown in Table 1 and Table 2.

[Identification of each crystal phase and measurement of content of each crystal phase]

Identification of each crystal phase contained in the oxide composite particles and measurement of the content of each crystal phase were performed by powder X-ray diffraction measurement/Rietveld method. As a measurement device, a sample horizontal-type multipurpose X-ray diffractometer (manufactured by Rigaku Corporation, trade name: RINT-Ultima IV) was used. Measurement was performed under the following conditions: X-ray source: CuKα, tube voltage: 40 kV, tube current: 40 mA, scan speed: 10.0°/min, and 2θ scan range: 10° to 70°. As an example, the X-ray diffraction pattern of the oxide composite particles of Example 1 is shown in Fig. 1. The quantitative analysis of crystal phases was performed using Rietveld method software (manufactured by MDI, trade name: integrated powder XRD software Jade+9.6). The proportion (% by mass) of each crystal phase was determined by X-ray diffraction measurement of an oxide composite particle sample and calculation by Rietveld analysis. At this time, by using the following formula (2), the content (Rc) (% by mass) of α-cristobalite as a silica component in the oxide composite particle sample was calculated from the ratio between the peak area (As) of an α-cristobalite crystal phase-derived peak among X-ray diffraction peaks obtained by X-ray diffraction measurement of the oxide composite particle sample and the peak area (Ac) of an X-ray diffraction peak obtained by measuring a cristobalite reference sample (JAWE 551) manufactured by Japan Association for Working Environment Measurement.

$$Rc = 100As / Ac \quad (2)$$

The thus determined α-cristobalite content and the proportion of the crystal phase separately obtained by Rietveld analysis were compared to calculate the contents of each crystal phase and an amorphous silica component in the oxide composite particle sample in the following manner.

The content (% by mass) of each crystal phase determined by Rietveld analysis is defined as follows: the content of an α-cristobalite crystal phase is defined as C, the content of an α-alumina crystal phase is defined as A, the content of a mullite crystal phase is defined as M, and the content of another crystal phase is defined as X. At this time, Rc, A × Rc/C, M × Rc/C, and X × Rc/C obtained by multiplying Rc/C, which is the ratio of C and Rc, by C, A, M, and X were respectively defined as the contents (% by mass) of an α-cristobalite crystal phase, an α-alumina phase, a mullite crystal phase, and another crystal phase, and the rest was defined as an amorphous component.

[Measurement of elemental ratio of aluminum/silicon determined by XPS]

The elemental ratio of aluminum/silicon at the surface of the oxide composite particles was measured using an X-ray photoelectron spectrometer (XPS, manufactured by Thermo Fisher Scientific, trade name: K-Alpha). The oxide composite particles were introduced into the device and then measured by irradiating a measurement area of 400 × 200 μm with monochromatic Al-Kα rays.

[Measurement of average particle diameter]

The average particle diameter was measured using a laser diffraction particle size distribution analyzer (manufactured by Beckman Coulter, Inc., trade name: LS 13 320). 50 cm³ of pure water and 0.1 g of a measurement sample were placed in a glass beaker and subjected to dispersion treatment for 1 minute in an ultrasonic homogenizer (manufactured by BRANSON, trade name: SFX250). The dispersion liquid of the measurement sample obtained by dispersion treatment was added drop by drop with a dropper to the laser diffraction particle size distribution analyzer, and measurement was performed 30 seconds after a predetermined amount of the dispersion liquid was added. From the data of light intensity distribution of diffracted/scattered light by the measurement sample detected by a sensor in the laser diffraction particle size distribution analyzer, particle size distribution was calculated. The average particle diameter was determined by multiplying the value of a measured particle diameter by a relative particle volume (percentage difference) and dividing by the total relative particle volume (100%). It should be noted that % herein means % by volume.

[Measurement of average circularity]

The oxide composite particles were fixed to a sample stage by a carbon tape and then subjected to osmium coating, and an image thereof with a magnification of 500 to 5000× and a resolution of 2048 × 1356 pixels taken by a scanning electron microscope (manufactured by JEOL Ltd., trade name: JSM-7001F SHL) was loaded into a personal computer. From the image, the projected area (S) and projected perimeter (L) of a single oxide composite particle were calculated using an image analyzer (manufactured by Nippon Roper, K.K., trade name: Image-Pro Premier Ver. 9.3), and the circularity of the oxide composite particle was calculated by the following formula (1). The circularities of randomly-selected 100 oxide composite particles having a projected area diameter of 0.1 $\mu$m or more were determined in such a manner as described above, and the average thereof was determined as an average circularity.

$$\text{Circularity} = 4\pi S / L^2 \, (1)$$

[Measurement of density]

The density of the oxide composite particles was measured by dry density measurement. An oxide composite particle sample whose weight was previously measured was placed in a measurement cell of a dry automatic densitometer (AccuPyc II 1340) manufactured by SHIMADZU CORPORATION, and the volume and density of the sample were determined by dry measurement based on helium pycnometry.

[Measurement of average angle of repose of alumina particles]

The average angle of repose of the alumina particles was determined by repose angle measurement using a powder tester. The heap of the alumina particles formed by supplying a sample while vibrating a dispersion screen having an opening of 1700 $\mu$m in a powder tester (PT-X) manufactured by HOSOKAWA MICRON CORPORATION was photographed by a CCD camera, and the angle of repose was measured by image processing.

[Measurement of specific surface area of alumina particles]

The specific surface area of the alumina particles was measured by gas adsorption measurement. 1 gram of a sample was placed in a measurement cell and the specific surface area was measured by a full automatic specific surface area analyzer (one point method for BET method) Macsorb HM model-1201 manufactured by Mountech Co., Ltd. Deaeration conditions before measurement were 200°C and 10 minutes. Nitrogen was used as an adsorption gas.

[Measurement of thermal conductivity of resin composition]

25.6 parts by mass of a bisphenol A-type liquid epoxy resin (manufactured by Mitsubishi Chemical Corporation, trade name: JER828) and 6.4 parts by mass of 4,4'-diaminophenylmethane (manufactured by Tokyo Chemical Industry Co., Ltd.) were mixed while being melted at 95°C. Then, the oxide composite particles were added to the mixture so that the content thereof was 40% by volume, and the resultant was mixed by a planetary stirrer (manufactured by THINKY CORPORATION, trade name: Awatori Rentaro AR-250, rotation speed 2000 rpm). The obtained mixture was poured into a silicone mold (2 cm square × 6 mm thickness) previously heated to 80°C and cured by hot press using a vacuum hot press machine (manufactured by Imoto machinery Co., LTD, trade name: IMC-1674-A) under the conditions of 80°C/1 hour/3 MPa, then 150°C/1 hour/5 MPa, and then 200°C/0.5 hours/7 MPa to obtain a resin composition.
The thermal conductivity of the resin composition was calculated by multiplying all of thermal diffusivity, specific gravity, and specific heat. The thermal diffusivity was determined by a laser flash method using the cured sample processed to have a size of 10 mm wide × 10 mm × 1 mm thick. As a measurement device, a xenon flash analyzer (manufactured by NETZSCH, trade name: LFA447 NanoFlash) was used. The specific gravity was determined using the Archimedes method. The specific heat was determined using a differential scanning calorimeter (manufactured by TA Instruments, trade name: Q2000) by increasing the temperature from a room temperature to 200°C at a temperature rise rate of 10°C/min in a nitrogen atmosphere.

[Measurement of dielectric constant and dielectric loss tangent of resin composition]

The oxide composite particles and a polyethylene powder (manufactured by Sumitomo Seika Chemicals Company, Limited., trade name: FLO-THENE UF-20S) were weighed so that the content of the oxide composite particles was 40% by volume, and were mixed by a vibration mixer manufactured by Resodyn (acceleration 60 g, treatment time 2 minutes). A predetermined volume of the obtained mixed powder was weighed (so that the thickness was about 0.5 mm), placed in a metallic frame having a diameter of 3 cm, and formed into a sheet by a nanoimprint device (manufactured by SCIVAX, trade name: X-300) under the conditions of 140°C, 5 minutes, and 30000 N to obtain an evaluation sample. The sheet as the evaluation sample has a thickness of about 0.5 mm. The shape or size of the evaluation sample does not influence the evaluation results as long as the evaluation sample can be loaded in a measurement device, but is about 1 to 3 cm square.

The dielectric characteristics were measured by the following method. A 36 GHz cavity resonator (manufactured by SUMTEC, Inc.) was connected to a vector network analyzer (trade name: 85107, manufactured by Keysight Technologies), and the evaluation sample (1.5 cm square, thickness 0.5 mm) was set to cover a hole provided in the resonator and having a diameter of 10 mm to measure a resonance frequency ($f_0$) and an unloaded Q value ($Q_u$). The evaluation sample was rotated after every measurement to repeat the measurement 5 times in the same manner. The average of the obtained values of $f_0$ and the average of the obtained values of $Q_u$ were determined as measured values. The dielectric constant and the dielectric loss tangent ($\tan\delta_c$) were respectively calculated from $f_0$ and $Q_u$ using analysis software (software manufactured by SUMTEC, Inc.). The measurement temperature was 20°C and the humidity was 60%RH.

[Measurement of viscosity of resin composition]

The oxide composite particles and a bisphenol A-type liquid epoxy resin (manufactured by Mitsubishi Chemical Corporation, trade name: JER828) were mixed so that the content of the oxide composite particles was 40% by volume with respect to the total volume, and were kneaded by a planetary stirrer ("Awatori Rentaro AR-250" manufactured by THINKY CORPORATION, rotation speed 2000 rpm) to prepare a resin composition. The viscosity of the obtained resin composition was measured using a rheometer ("MCR-302" manufactured by Anton Parr GmbH) under the following conditions.

Plate shape: circular flat plate 10 mm$\phi$

Sample thickness: 1 mm

Temperature: 25 $\pm$ 1°C

Shear rate: 1 s$^{-1}$

[Table 1]

| | | | Example 1 | Example 2 | Example 3 | Example 4 | Example 5 | Example 8 | Example 7 | Example 8 |
|---|---|---|---|---|---|---|---|---|---|---|
| Silica particles | Type | | FB40R | FB5D | FB40R | FB40R | FB40R | FB5D | FB40R | FB5D |
| | Averaae particle diameter | (um) | 50.1 | 8.0 | 50.1 | 50.1 | 50.1 | 8.0 | 50.1 | 8.0 |
| Alumina particles | Type | | AKPG07 | AKPG07 | AKPG07 | AKPG07 | AKPG07 | AKPG07 | AKPG07 | AKPG07 |
| | Amount added | (% by mass) | 15 | 30 | 50 | 15 | 15 | 15 | 15 | 15 |
| | Averaae angle of repose | (°) | 52.5 | 52.5 | 52.5 | 52.5 | 52.5 | 52.5 | 52.5 | 52.5 |
| | Specific surface area | (m$^2$/g) | 80.0 | 80.0 | 80.0 | 80.0 | 80.0 | 80.0 | 80.0 | 80.0 |
| | Heating temperature | (°c) | 1400 | 1400 | 1400 | 1300 | 1500 | 1400 | 1400 | 1400 |
| | Heating time | (h) | 4 | 4 | 4 | 8 | 2 | 4 | 4 | 4 |
| Oxide composite particles | $\alpha$-Cristobalite crystal phase content | (% by mass) | 84 | 65 | 48 | 80 | 84 | 84 | 79 | 79 |
| | $\alpha$-Alumina crystal phase content | (% by mass) | 15 | 28 | 49 | 13 | 15 | 15 | 11 | 5 |
| | Mullite crystal phase content | (% by mass) | 1 | 1 | 1 | 1 | 1 | 1 | 3 | 10 |
| | XPS aluminum/silicon elemental ratio | (-) | 2.3 | 3.4 | 3.0 | 2.3 | 2.5 | 1.6 | 2.1 | 1.8 |
| | Alumina content | (% by mass) | 15 | 30 | 50 | 15 | 15 | 15 | 15 | 15 |
| | Averaae particle diameter | (um) | 40 | 8.3 | 32.5 | 23.5 | 63 | 8.3 | 43 | 8.4 |
| | Averaae circularity | (-) | 0.90 | 0.90 | 0.78 | 0.82 | 0.73 | 0.75 | 0.90 | 0.75 |
| | Density | (g/mL) | 2.5 | 2.8 | 3.0 | 2.5 | 2.5 | 2.6 | 2.5 | 2.6 |
| Resin composition | Thermal conductivity | (W/mK) | 0.86 | 0.89 | 0.95 | 0.85 | 0.87 | 0.85 | 0.86 | 0.85 |
| | Dielectric constant | (-) | 3.1 | 3.2 | 3.6 | 3.1 | 3.1 | 3.1 | 3.2 | 2.9 |
| | Dielectric loss tangent | (10$^{-4}$) | 2.9 | 3.7 | 4.8 | 3.1 | 2.9 | 2.9 | 2.8 | 2.7 |
| | Viscosity | (PaS) | 439 | 493 | 480 | 450 | 620 | 460 | 480 | 465 |

EP 4 269 343 A1

[Table 2]

|  |  |  | Comparative Example 1 | Comparative Example 2 | Comparative Example 3 | Comparative Example 4 |
|---|---|---|---|---|---|---|
| Silica particles | Type |  | FB40R | FB5D | FB40R | FB5D |
|  | Average particle diameter | (um) | 50.1 | 8.0 | 50.1 | 50.1 |
| Alumina particles | Type |  | AKPG07 | AKPG07 | AKPG07 | TM-DA |
|  | Amount added | (% by mass) | 10 | 55 | 15 | 15 |
|  | Averaae angle of repose | (°) | 52.5 | 52.5 | 52.5 | 48.0 |
|  | Specific surface area | (m²/g) | 80.0 | 80.0 | 80.0 | 6.6 |
|  | Heating temperature | (°C) | 1400 | 1400 | 1200 | 1400 |
|  | Heating time | (h) | 4 | 4 | 4 | 4 |
| Oxide composite particles | α-Cristobalite crystal phase content | (% by mass) | 86 | 35 | 12 | 80 |
|  | α-Alumina crystal phase content | (% by mass) | 8 | 52 | 13 | 13 |
|  | Mullite crystal phase content | (% by mass) | 0 | 1 | 0 | 1 |
|  | XPS aluminum/ silicon elemental ratio | (-) | 1.2 | 3.8 | 3.1 | 0.8 |
|  | Alumina content | (% by mass) | 10 | 55 | 15 | 15 |
|  | Averaae particle diameter | (um) | 46.7 | 5.8 | 20.6 | 48 |
|  | Averaae circularity | (-) | 0.81 | 0.80 | 0.82 | 0.80 |
|  | Density | (g/mL) | 2.5 | 3.2 | 2.4 | 2.5 |
| Resin composition | Thermal conductivity | (W/mK) | 0.75 | 0.77 | 0.72 | 0.66 |
|  | Dielectric constant | (-) | 3.0 | 3.6 | 3.1 | 3.1 |
|  | Dielectric loss tangent | (10⁻⁴) | 3.1 | 5.2 | 3.8 | 3.2 |
|  | Viscosity | (PaS) | 420 | 720 | 452 | 529 |

As can be seen from Table 1 and Table 2, the resin compositions respectively containing the oxide composite particles of Examples 1 to 8 according to the embodiment of the present invention had high thermal conductivity (0.80 W/m·K or more), low dielectric constant (4.0 or less), and low dielectric loss tangent ($5.0 \times 10^{-4}$ or less).

**Claims**

1. Oxide composite particles comprising silica and alumina, wherein

   the oxide composite particles contain 40 to 85% by mass of an $\alpha$-cristobalite crystal phase, 5 to 50% by mass of an $\alpha$-alumina crystal phase, and 10% by mass or less of a mullite crystal phase, and
   an elemental ratio of aluminum to silicon (aluminum/silicon) as determined by X-ray photoelectron spectroscopy is 1.5 or more.

2. The oxide composite particles according to claim 1, wherein a content of the alumina in the oxide composite particles is 15 to 50% by mass.

3. The oxide composite particles according to claim 1 or 2, wherein an average particle diameter of the oxide composite particles is 0.5 to 70 $\mu$m.

4. The oxide composite particles according to any one of claims 1 to 3, wherein an average circularity of the oxide composite particles is 0.7 or more.

5. A method for producing the oxide composite particles according to any one of claims 1 to 4, the method comprising the steps of:

   mixing silica particles having an average particle diameter of 0.5 to 70 $\mu$m and alumina particles having an average angle of repose of 50° or more and a specific surface area of 50 to 170 $m^2$/g to obtain a mixture; and
   heating the mixture at 1300 to 1500°C for 2 to 8 hours.

6. A resin composition comprising the oxide composite particles according to any one of claims 1 to 4 and a resin.

7. The resin composition according to claim 6, wherein a content of the oxide composite particles in the resin composition is 20 to 80% by mass.

8. The resin composition according to claim 6 or 7, which is a resin composition for high-frequency substrates.

Fig. 1

## INTERNATIONAL SEARCH REPORT

| International application No. |
| --- |
| **PCT/JP2021/042902** |

### A. CLASSIFICATION OF SUBJECT MATTER

*C01B 33/26*(2006.01)i; *C01B 33/18*(2006.01)i; *C04B 35/18*(2006.01)i; *C08K 3/013*(2018.01)i; *C08K 3/20*(2006.01)i; *C08K 9/00*(2006.01)i; *C08L 101/00*(2006.01)i

FI: C01B33/26; C08K3/20; C08L101/00; C04B35/18; C08K3/013; C08K9/00; C01B33/18 Z; C01B33/18 E

According to International Patent Classification (IPC) or to both national classification and IPC

### B. FIELDS SEARCHED

Minimum documentation searched (classification system followed by classification symbols)

C01B33/20-39/54; C04B35/18; C08K3/00-13/08;C08L1/00-101/14

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2019-19222 A (DENKA CO., LTD.) 07 February 2019 (2019-02-07)<br>entire text | 1-8 |
| A | JP 2020-176025 A (DENKA CO., LTD.) 29 October 2020 (2020-10-29)<br>entire text | 1-8 |
| A | JP 2018-54881 A (DENKA CO., LTD.) 05 April 2018 (2018-04-05)<br>entire text | 1-8 |
| A | JP 2001-240470 A (KYOCERA CORP.) 04 September 2001 (2001-09-04)<br>entire text | 1-8 |
| A | JP 2005-179137 A (KYOCERA CORP.) 07 July 2005 (2005-07-07)<br>entire text | 1-8 |
| A | JP 2002-53369 A (KYOCERA CORP.) 19 February 2002 (2002-02-19)<br>entire text | 1-8 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **11 January 2022** | **25 January 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2021/042902**

**C. DOCUMENTS CONSIDERED TO BE RELEVANT**

| Category* | Citation of document, with indication, where appropriate, of the relevant passages | Relevant to claim No. |
|---|---|---|
| A | JP 2003-192339 A (SHOWA DENKO K.K.) 09 July 2003 (2003-07-09)<br>entire text | 1-8 |

Form PCT/ISA/210 (second sheet) (January 2015)

**INTERNATIONAL SEARCH REPORT**
Information on patent family members

| International application No. |
|---|
| **PCT/JP2021/042902** |

| Patent document cited in search report | | | Publication date (day/month/year) | Patent family member(s) | | Publication date (day/month/year) |
|---|---|---|---|---|---|---|
| JP | 2019-19222 | A | 07 February 2019 | (Family: none) | | |
| JP | 2020-176025 | A | 29 October 2020 | (Family: none) | | |
| JP | 2018-54881 | A | 05 April 2018 | (Family: none) | | |
| JP | 2001-240470 | A | 04 September 2001 | US 2001-0029228 entire text DE 010109531 | A1 A1 | |
| JP | 2005-179137 | A | 07 July 2005 | (Family: none) | | |
| JP | 2002-53369 | A | 19 February 2002 | US 2002-0039645 entire text | A1 | |
| JP | 2003-192339 | A | 09 July 2003 | US 2005-018217 entire text CN 001692075 KR 10-2004-0071265 | A1 A A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 58138740 A
- JP 6207753 B
- WO 2018186308 A
- JP 10251042 A